# EUROPEAN PATENT APPLICATION

(11) **EP 3 226 188 A1**
(43) Date of publication of application: **04.10.2017**
(21) Application number: 17160472.1
(22) Date of filing: 13.03.2017
(51) Int. Cl.: G06Q 10/10

(54) **METHOD AND DEVICE FOR SYNCHRONIZING STATES**

(30) Priority: 29.03.2016 CN 201610189245
(71) Applicant: Beijing Xiaomi Mobile Software Co., Ltd., Beijing 100085 (CN)
(72) Inventor: TAN, Kangxi, BEIJING, 100085 (CN); LIANG, Xin, BEIJING, 100085 (CN); XU, Chao, BEIJING, 100085 (CN)
(74) Representative: Perrot, Emilie

(57) **Abstract**

The present invention relates to a method and a device for synchronizing states, which belongs to the field of communication technology. The method for synchronizing states includes: acquiring (101) a usage state of target contact information of a target user; detecting (102) whether the usage state of the target contact information has changed based on pre-stored usage states of respective contact information; if the usage state of the target contact information has changed, acquiring (103) a target contact list of the target user; and synchronizing (104) the usage state of the target contact information to contacts in the target contact list.

## Description

### TECHNICAL FIELD

The present invention generally relates to the field of communication technology, and more particularly, to a method and a device for synchronizing states.

### BACKGROUND

In daily life, a user may change his/her contact information, such as: a cell phone number of the user, an e-mail address of the user, anytime and anywhere.

In the prior art, the user needs to send changed contact information to each contact in a contact list after he/she changes his/her contact information. For example, a user A needs to send a new cell phone number to every friend after he/she changes his/her cell phone number.

### SUMMARY

Accordingly, the present invention provides a method and a device for synchronizing states, in accordance with claims which follow.

The present invention provides a method and a device for synchronizing states. The technical solution is as follows.

According to a first aspect, the invention relates to a method for synchronizing states, comprising:
acquiring a usage state of target contact information of a target user;
detecting whether the usage state of the target contact information has changed based on pre-stored usage states of respective contact information;
if the usage state of the target contact information has changed, acquiring a target contact list of the target user; and
synchronizing the usage state of the target contact information to contacts in the target contact list.

In an optional embodiment, the step of synchronizing the usage state of the target contact information to contacts in the target contact list comprises:
for each contact in the target contact list, acquiring a usage state of contact information of the contact; and
synchronizing the usage state of the target contact information to the contact whose contact information is "in use" in the target contact list.

In an optional embodiment, the step of synchronizing the usage state of the target contact information to contacts in the target contact list comprises:
for each contact in the target contact list, acquiring a preset contact list of the contact;
detecting whether the target contact information exists in the preset contact list; and
if the target contact information exists in the preset contact list, synchronizing the usage state of the target contact information to the contact corresponding to the preset contact list.

In an optional embodiment, if the usage state of the target contact information is updated to disuse, the method further comprises:
acquiring updated target contact information; and
synchronizing the updated target contact information to contacts in the target contact list.

According to a second aspect, the invention relates to a method for synchronizing states, comprising:
receiving a setting signal;
setting a usage state of target contact information based on the setting signal; and
sending the set usage state of the target contact information to a server, such that the server synchronizes the usage state of the target contact information to contacts in a contact list of a terminal when detecting that the usage stage of the target contact information has changed.

According to a third aspect, the invention relates to a device for synchronizing states, comprising:
a state receiving module configured to acquire a usage state of target contact information of a target user;
a state detecting module configured to detect whether the usage state of the target contact information has changed based on pre-stored usage states of respective contact information;
a list acquiring module configured to, if the usage state of the target contact information has changed, acquire a target contact list of the target user; and
a state synchronizing module configured to synchronize the usage state of the target contact information to contacts in the target contact list.

In an optional embodiment, the state synchronizing module comprises:
a first acquiring sub-module configured to, for each contact in the target contact list, acquire a usage state of contact information of the contact; and
a first synchronizing sub-module configured to synchronize the usage state of the target contact information to the contact whose contact information is "in use" in the target contact list.

In an optional embodiment, the state synchronizing module comprises:
a second acquiring sub-module configured to, for each contact in the target contact list, acquire a preset contact list of the contact;
a target detecting sub-module configured to detect whether the target contact information exists in the preset contact list; and
a second synchronizing sub-module configured to, if the target contact information exists in the preset contact list, synchronize the usage state of the target contact information to the contact corresponding to the preset contact list.

In an optional embodiment, if the usage state of the target contact information is updated to disuse, the device further comprises:
an updating acquiring module configured to acquire updated target contact information; and
an updating synchronizing module configured to synchronize the updated target contact information to contacts in the target contact list.

According to a fourth aspect, the invention relates to a device for synchronizing states, comprising:
a signal receiving module configured to receive a setting signal;
a state setting module configured to set a usage state of target contact information based on the setting signal; and
a state sending module configured to send the set usage state of the target contact information to a server, such that the server synchronizes the usage state of the target contact information to contacts in a contact list of a terminal when detecting that the usage stage of the target contact information has changed.

According to a fifth aspect, the invention relates to a device for synchronizing states, comprising:
a processor; and
a memory for storing instructions executable by the processor,
wherein the processor is configured to perform:
   acquiring a usage state of target contact information of a target user;
   detecting whether the usage state of the target contact information has changed based on pre-stored usage states of respective contact information;
   if the usage state of the target contact information has changed, acquiring a target contact list of the target user; and
   synchronizing the usage state of the target contact information to contacts in the target contact list.

According to a sixth aspect, the invention relates to a device for synchronizing states, including:
a processor; and
a memory for storing instructions executable by the processor,
wherein the processor is configured to perform:
   receiving a setting signal;
   setting a usage state of target contact information based on the setting signal; and
   sending the set usage state of the target contact information to a server, such that the server synchronizes the usage state of the target contact information to contacts in a contact list of a terminal when detecting that the usage stage of the target contact information has changed.

In one particular embodiment, the steps of the method for synchronizing states are determined by computer program instructions.

Consequently, according to a seventh aspect, the present invention is also directed to a computer program for executing the steps of a method for synchronizing states as described above when this program is executed by a computer.

This program can use any programming language and take the form of source code, object code or a code intermediate between source code and object code, such as a partially compiled form, or any other desirable form.

The present invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical scheme according to embodiments of the present invention may have the following beneficial effects.

A usage state of target contact information of a target user is acquired; it is detected whether the usage state of the target contact information has changed based on pre-stored usage states of respective contact information; if the usage state of the target contact information has changed, a target contact list of the target user is acquired; and the usage state of the target contact information is synchronized to contacts in the target contact list. A server detects whether the usage state of the target contact information has changed, and automatically synchronizes the usage state of the target contact information to the contacts in the target contact list when it is detected that the usage state of the target contact information has changed. It solves a problem that a user needs to manually send changed contact information to each contact in a contact list after he/she changes his/her contact information; and achieves an effect that the usage state of the target contact information is automatically synchronized to the contacts in the target contact list when the usage state of the target contact information has changed, i.e. automatically synchronizing the usage state of the target contact information.

It is to be understood that both the foregoing general description and the following detailed description are exemplary only and are not restrictive of the present invention.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
Fig. 1 is a flow chart showing a method for synchronizing states according to an exemplary embodiment;
Fig. 2 is a flow chart showing a method for synchronizing states according to an exemplary embodiment;
Fig. 3A is a flow chart showing a method for synchronizing states according to another exemplary embodiment;
Fig. 3B is a schematic diagram showing a method for setting a usage state according to an exemplary embodiment;
Fig. 3C is a schematic diagram showing a method for setting a usage state according to another exemplary embodiment;
Fig. 4A is a flow chart showing a method for synchronizing states according to a further exemplary embodiment;
Fig. 4B is a display schematic diagram showing usage states in a contact list according to an exemplary embodiment;
Fig. 5A is a flow chart showing a method for synchronizing states according to a still further exemplary embodiment;
Fig. 5B is a schematic diagram showing a method for setting usage states of contacts according to an exemplary embodiment;
Fig. 6 is a block diagram showing a device for synchronizing states according to an exemplary embodiment;
Fig. 7 is a block diagram showing a device for synchronizing states according to another exemplary embodiment;
Fig. 8 is a block diagram showing a device for synchronizing states according to an exemplary embodiment; and
Fig. 9 is a block diagram showing a device for synchronizing states according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of devices and methods consistent with aspects related to the present invention as recited in the appended claims.

The method for synchronizing states according to embodiments of the present invention is mainly applicable to a situation when the target contact information of the target user has changed, the server synchronizes the usage state of the target contact information to contacts in the target contact list of the target user, so that contacts in the target contact list may learn the target contact information being used by the target user in time.

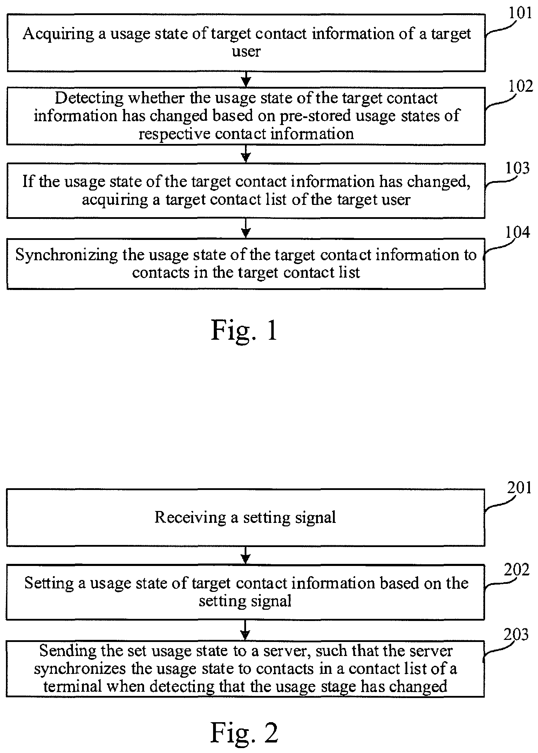

Fig. 1 is a flow chart showing a method for synchronizing states according to an exemplary embodiment. As shown in Fig. 1, the method for synchronizing states is performed by a server. The method for synchronizing states includes following steps.

In step 101, a usage state of target contact information of a target user is acquired.

In step 102, it is detected whether the usage state of the target contact information has changed based on pre-stored usage states of respective contact information.

In step 103, if the usage state of the target contact information has changed, a target contact list of the target user is acquired.

In step 104, the usage state of the target contact information is synchronized to contacts in the target contact list.

Accordingly, in the method for synchronizing states provided by embodiments of the present invention, a usage state of target contact information of a target user is acquired; it is detected whether the usage state of the target contact information has changed based on pre-stored usage states of respective contact information; if the usage state of the target contact information has changed, a target contact list of the target user is acquired; and the usage state of the target contact information is synchronized to contacts in the target contact list. A server detects whether the usage state of the target contact information has changed, and automatically synchronizes the usage state of the target contact information to the contacts in the target contact list when it is detected that the usage state of the target contact information has changed. It solves a problem that a user needs to manually send changed contact information to each contact in a contact list after he/she changes his/her contact information; and achieves an effect that the usage state of the target contact information is automatically synchronized to the contacts in the target contact list when the usage state of the target contact information has changed, i.e. automatically synchronizing the usage state of the target contact information.

Fig. 2 is a flow chart showing a method for synchronizing states according to an exemplary embodiment. As shown in Fig. 2, the method for synchronizing states is performed by a terminal. The method for synchronizing states includes following steps.

In step 201, a setting signal is received.

In step 202, a usage state of target contact information is set based on the setting signal.

In step 203, the set usage state of the target contact information is sent to a server, such that the server synchronizes the usage state of the target contact information to contacts in a contact list of the terminal when detecting that the usage stage of the target contact information has changed.

Accordingly, in the method for synchronizing states provided by embodiments of the present invention, a setting signal is received; a usage state of target contact information is set based on the setting signal; and the set usage state of the target contact information is sent to a server, such that the server synchronizes the usage state of the target contact information to contacts in a contact list of a terminal when detecting that the usage stage of the target contact information has changed. The terminal sets a usage state of target contact information based on the setting signal and sends the set usage state to a server. It solves a problem that a user needs to manually send changed contact information to each contact in a contact list after he/she changes his/her contact information; and achieves an effect that the usage state of the target contact information is automatically synchronized to the contacts in the target contact list when the usage state of the target contact information has changed, i.e. automatically synchronizing the usage state of the target contact information.

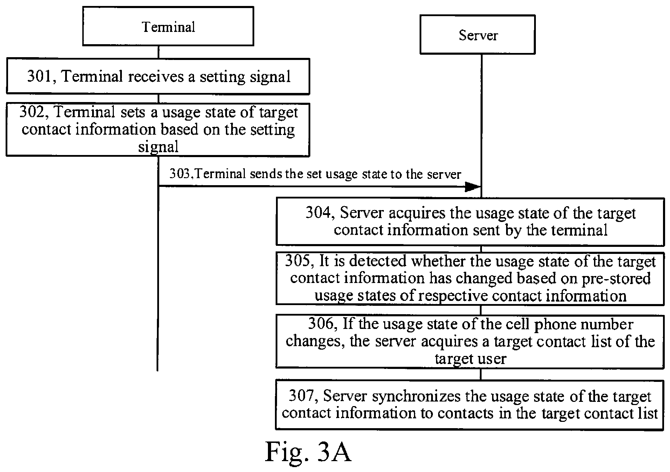

Fig. 3A is a flow chart showing a method for synchronizing states according to another exemplary embodiment. As shown in Fig. 3A, the method for synchronizing states includes following steps.

In step 301, a terminal receives a setting signal.

When a target user needs to set a usage state of his/her own contact information, the target user may apply a setting signal for setting the usage state of his/her own contact information in the terminal. Correspondingly, the terminal may receive the setting signal. The target contact information may refer to the target user's own contact information.

The target contact information includes: any one of a cell phone number, an e-mail address, or a social account. A content of the target contact information is not specifically limited in embodiments of the present invention. The setting signal includes: a newly adding signal for newly adding a usage state for the target contact information, or an updating signal for updating an existing usage state of the target contact information.

Optionally, the user may set the usage state by setting a state label or a state identification. Thus, the terminal may receive a corresponding setting signal correspondingly.

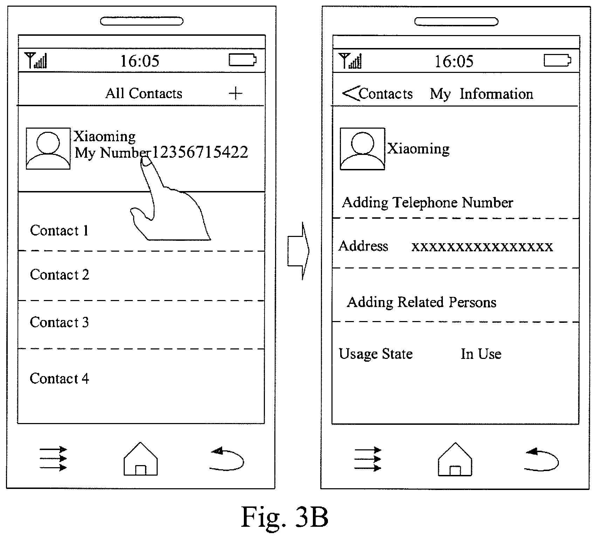

Referring to Fig. 3B, for example, after the user changes his/her cell phone number, when he/she would like to set the usage state of the cell phone number as "in use" state, he/she may click "My Number" to open an editing interface of "My Information" and apply a setting signal which indicates the usage state of the cell phone number to be "in use" in the editing interface.

For another example, when the user disuses the current cell phone number and wants to update the usage state of the cell phone number from "in use" to "disuse", he/she may apply an updating signal which updates the usage state of the cell phone number to "disuse" in the terminal.

It should be noted that, the terminal in embodiments of the present invention may be a smart phone, a tablet PC, a smart television, an e-book reader, a multimedia player and the like.

In step 302, the terminal sets a usage state of target contact information based on the setting signal.

Optionally, when the usage state of the target contact information is updated from "in use" to "disuse", the user may further apply a setting signal which sets updated target contact information. At this time, the terminal may set the updated target contact information correspondingly based on the received setting signal. Optionally, the usage state of the updated target contact information and the usage state of previous target contact information may be set simultaneously.

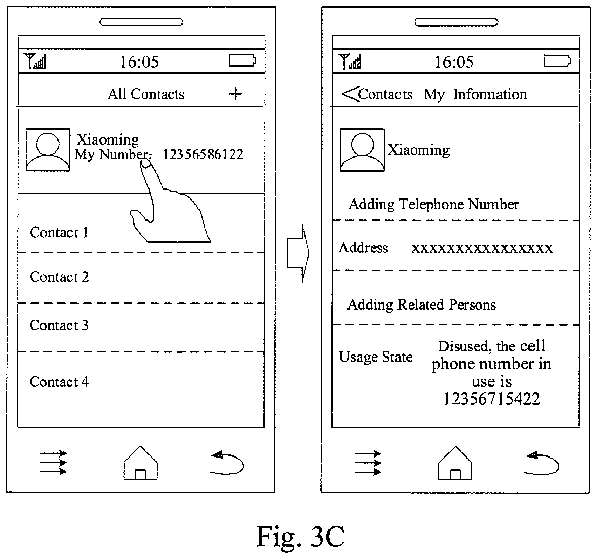

For example, when the user needs to change his/her cell phone number and wants to set the usage state of the cell phone number, he/she may click "My Number" to open an editing interface of "My Information" and edit the usage state of the previous cell phone number in the editing interface as "disuse" firstly, and then add information of "the cell phone number in use is 12356715422", as shown in Fig. 3C.

In step 303, the terminal sends the set usage state of the target contact information to a server.

After setting the usage state of the target contact information based on the setting signal, the terminal sends the set usage state of the target contact information to the server.

In step 304, the server acquires the usage state of the target contact information sent by the terminal.

In step 305, it is detected whether the usage state of the target contact information has changed based on pre-stored usage states of respective contact information.

After acquiring the usage state of the target contact information sent by the terminal, the server detects whether the acquired usage state of the target contact information has changed based on pre-stored usage states of respective contact information.

When the usage state of the target contact information acquired this time is different from a pre-stored usage state of the same target contact information, it is determined that the usage state of the target contact information has changed. When the usage state of the target contact information acquired this time is the same as a pre-stored usage state of the same target contact information, it is determined that the usage state of the target contact information does not change.

For example, when the server receives a usage state of the cell phone number 12356715422, indicating "disuse", sent by the smart phone, it detects whether a usage state of this cell phone number is stored in a pre-stored list of usage states of contact information based on the cell phone number. If the server detects that a usage state of this cell phone number is stored in the pre-stored list of usage state of contact information, it acquires the pre-stored usage stage of this cell phone number. Assuming that the pre-stored usage stage is "in use", the server compares the usage state of "disuse" acquired this time and the pre-stored usage state of "in use". Since the usage state acquired this time is different from the pre-stored usage state, the server determines that the usage state of this cell phone number has changed. If the server detects that no usage state of this cell phone number is stored in the pre-stored list of usage state of contact information, it determines that the usage state of the contact information is a newly added usage state. At this time, the server may also determine that the usage state of this cell phone number has changed.

In step 306, if the usage state of the target contact information changes, the server acquires a target contact list of the target user.

When the server determines that the usage state of the target contact information has changed, the server acquires the target contact list of the target user based on the target contact information.

The contact list of respective contact information is pre-stored in the server. When the server recognizes that the usage state of the target contact information has changed, the server may acquire the target contact list corresponding to the target contact information.

Optionally, if the usage state of target contact information does not change, the server may skip the following step 307.

In step 307, the server synchronizes the usage state of the target contact information to contacts in the target contact list.

After the server acquires the target contact list, it reads contact information corresponding to respective contacts in the target contact list. The server synchronizes the usage state of the target contact information to respective contacts based on the read contact information.

For example, when the server determines that the usage state of the cell phone number 12356715422 is updated to "in use", then it acquires the target contact list corresponding to the cell phone number 12356715422, and reads contact information corresponding to respective contacts in the target contact list. The server synchronizes "12356715422+in use" to respective contacts in the target contact list based on the read contact information.

Optionally, when the usage state of the target contact information is updated to "disuse", the server may further acquire the updated target contact information, and synchronizes the updated target contact information to contacts in the target contact list. Optionally, the server may synchronize the updated target contact information along with the previous target contact information to respective contacts in the target contact list.

For example, when the server recognizes that the usage state of the cell phone number 12356715422 reported by the terminal is changed from "in use" to "disuse", it acquires the target contact list corresponding to the cell phone number 12356715422, and synchronizes the received "cell phone number 12356715422+disuse, and the number in use is 12356715432" to respective contacts in the target contact list.

Optionally, a synchronization mode that the server synchronizes the usage state of the target contact information may include short messages, e-mails or automatically updating the usage state of the target contact information in preset contact lists of respective contacts in the target contact list. The present embodiment does not specifically limit the mode that the server synchronizes the usage state of the target contact information.

For example, when the usage state of the cell phone number of the user has changed, the server edits the usage state of the cell phone number of the user into a short message and sends it to friends of the user. For another example, when the usage state of the e-mail address of the user has changed, the server edits the usage state of the e-mail address of the user into an e-mail form and sends it to friends of the user. For still another example, when the usage state of the cell phone number of the user has changed, the server directly updates the usage state of the cell phone number of the user in contact lists of his/her friends.

Accordingly, in the method for synchronizing states provided by embodiments of the present invention, a usage state of target contact information of a target user is acquired; it is detected whether the usage state of the target contact information has changed based on pre-stored usage states of respective contact information; if the usage state of the target contact information has changed, a target contact list of the target user is acquired; and the usage state of the target contact information is synchronized to contacts in the target contact list. A server detects whether the usage state of the target contact information has changed, and automatically synchronizes the usage state of the target contact information to the contacts in the target contact list when it is detected that the usage state of the target contact information has changed. It solves a problem that a user needs to manually send changed contact information to each contact in a contact list after he/she changes his/her contact information; and achieves an effect that the usage state of the target contact information is automatically synchronized to the contacts in the target contact list when the usage state of the target contact information has changed, i.e. automatically synchronizing the usage state of the target contact information.

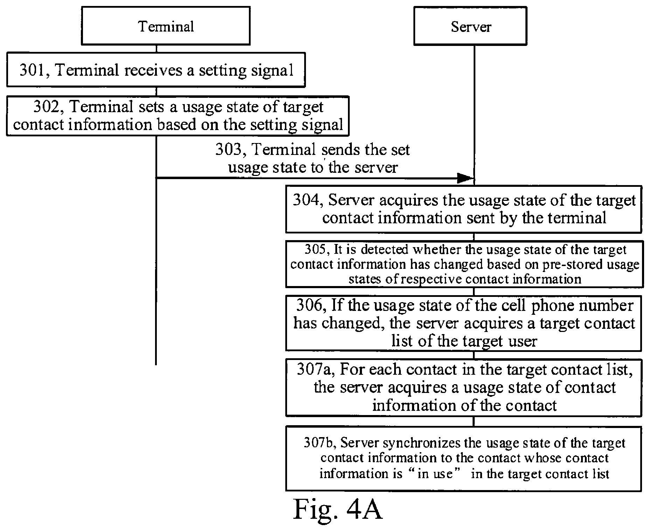

Based on the embodiment as shown in Fig. 3A, the server synchronizes the usage state of the target contact information to respective contacts in the target contact list. As a possible implementation, the server only synchronizes the usage state of the target contact information to contacts whose contact information is "in use" in the target contact list. Therefore, referring to Fig. 4A, the step 307 in the above embodiments may be replaced by following steps 307a and 307b.

In step 307a, for each contact in the target contact list, the server acquires the usage states of contact information of the contacts.

After the server acquires the target contact list of the target user, it reads contact information corresponding to each contact in the target contact list, and acquires the usage state of each contact information at the same time.

Optionally, the usage state of each contact information is pre-stored in the server. After the server reads contact information of each contact in the target contact list, it acquires the usage state corresponding to contact information of each contact in the target contact list.

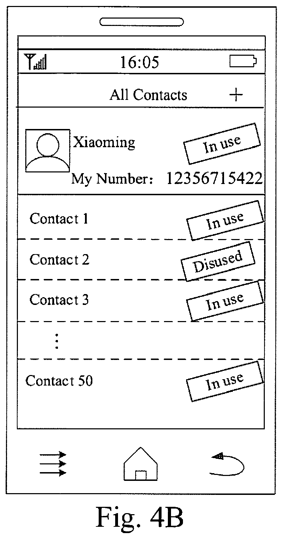

For example, when the cell phone number of a user A is 12356715422, and the usage state of the cell phone number is "in use", The contact list of the user A includes: a contact 1, a contact 2, a contact 3, ..., and a contact 50. The usage state of the contact 1 is "in use", the usage state of the contact 2 is "disuse", the usage state of the contact 3 is "in use", ..., and the usage state of the contact 50 is "in use", as shown in Fig. 4B.

Optionally, for each contact in the target contact list, the usage state of each contact information is stored in the target contact list, so that the target contact may learn the contact information being used by each contact based on the usage state of each contact information in the target contact list.

In step 307b, the server synchronizes the usage state of the target contact information to contacts whose contact information is "in use" in the target contact list.

After acquiring the usage state of contact information of each contact in the target contact list, the server reads respective contact information is "in use" (i.e. the usage state of contact information is "in use") in the target contact list, and synchronizes the usage state of the target contact information to contacts corresponding to the read respective contact information is "in use",

Accordingly, in the method for synchronizing states provided by embodiments of the present invention, a usage state of target contact information of a target user is acquired; it is detected whether the usage state of the target contact information has changed based on pre-stored usage states of respective contact information; if the usage state of the target contact information has changed, a target contact list of the target user is acquired; and the usage state of the target contact information is synchronized to contacts in the target contact list. A server detects whether the usage state of the target contact information has changed, and automatically synchronizes the usage state of the target contact information to the contacts in the target contact list when it is detected that the usage state of the target contact information has changed. It solves a problem that a user needs to manually send changed contact information to each contact in a contact list after he/she changes his/her contact information; and achieves an effect that the usage state of the target contact information is automatically synchronized to the contacts in the target contact list when the usage state of the target contact information has changed, i.e. automatically synchronizing the usage state of the target contact information.

Further, the server only synchronizes the usage state of the target contact information to contacts whose contact information is "in use" in the target contact list, which achieves that contacts whose contact information is "disused" in the target contact list cannot receive the usage state of the target contact information synchronized by the server. Thus, the server does not need to synchronize the usage state of the target contact information to contacts whose contact information is "disused", which reduces possibility of wasting server source, and also guarantees safety of the target contact information at the same time.

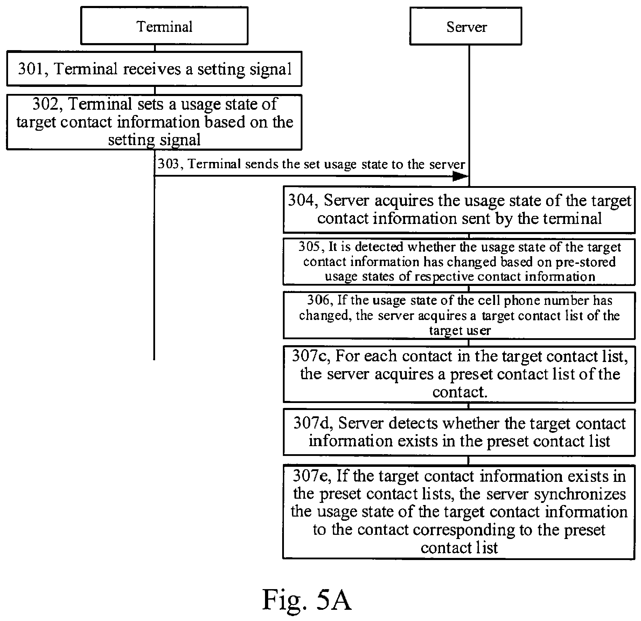

Based on the embodiment as shown in Fig. 3A, the server synchronizes the usage state of the target contact information to respective contacts in the target contact list. As another possible implementation, the server may only synchronize the usage state of the target contact information to contacts whose preset contact lists have the target contact information among contacts in the target contact list. Therefore, referring to Fig. 5A, the step 307 may be replaced by following steps 307c to 307e.

In step 307c, for each contact in the target contact list, the server acquires a preset contact list of the contact.

After acquiring the target contact list of the target user, the server reads contact information of each contact in the target contact list. The server acquires the preset contact list corresponding to each contact, based on each of the read contact information and pre-stored contact lists corresponding to respective contacts. In the embodiment, the preset contact list refers to respective contact list corresponding to each contact.

In step 307d, the server detects whether the target contact information exists in the preset contact lists.

After acquiring the preset contact list of each contact, the server detects whether the target contact information exists in the acquired preset contact lists.

For example, the target contact list of the user A includes 100 contacts, being a contact 1, a contact 2, ..., and a contact 100, respectively. It is detected whether the target contact information of the user A exists in the preset contact lists corresponding to the contact 1, the contact 2, ..., and the contact 100, respectively.

In step 307e, if the target contact information exists in the preset contact lists, the server synchronizes the usage state of the target contact information to contacts corresponding to the preset contact lists.

When the target contact information exists in the preset contact lists, since the contacts corresponding to the preset contact lists also have the target contact information, it indicates that there is a friend relationship between the target user and the contacts corresponding to the preset contact lists. Thus, the server synchronizes the usage state of the target contact information (of the target user) to contacts corresponding to the preset contact lists.

For example, the target contact list of the user A includes 100 contacts, being a contact 1, a contact 2, ..., and a contact 100, respectively, while preset contact lists corresponding to the contacts 1 to 10 do not have the contact information of the user A, and preset contact lists corresponding to the contacts 11 to 100 have the contact information of the user A, so the server synchronizes the usage state of the contact information of the user A to contacts 11 to 100.

Optionally, if the target contact information does not exist in the preset contact lists, the server does not synchronize the usage state of the target contact information to contacts corresponding to the preset contact lists.

When the target contact information does exist in the preset contact lists, since contacts corresponding to the preset contact lists do not have the target contact information, it indicates that there may be no friendly relationship between the target user and the contacts corresponding to the preset contact lists. Thus, the server does not synchronize the usage state of the target contact information to contacts corresponding to the preset contact lists.

For example, the target contact list of the user A includes 100 contacts, being a contact 1, a contact 2, ..., and a contact 100, respectively, while preset contact lists corresponding to the contacts 1 to 10 do not have the contact information of the user A, and preset contact lists corresponding to the contacts 11 to 100 have the contact information of the user A, so the server does not synchronize the usage state of the contact information of the user A to contacts 1 to 10.

Accordingly, in the method for synchronizing states provided by embodiments of the present invention, a usage state of target contact information of a target user is acquired; it is detected whether the usage state of the target contact information has changed based on pre-stored usage states of respective contact information; if the usage state of the target contact information has changed, a target contact list of the target user is acquired; and the usage state of the target contact information is synchronized to contacts in the target contact list. A server detects whether the usage state of the target contact information has changed, and automatically synchronizes the usage state of the target contact information to the contacts in the target contact list when it is detected that the usage state of the target contact information has changed. It solves a problem that a user needs to manually send changed contact information to each contact in a contact list after he/she changes his/her contact information; and achieves an effect that the usage state of the target contact information is automatically synchronized to the contacts in the target contact list when the usage state of the target contact information has changed, i.e. automatically synchronizing the usage state of the target contact information.

Further, the server only synchronizes the usage state of the target contact information to contacts whose preset contact lists have the target contact information. When the target contact information do not exist in the preset contact lists, it indicates that there may be no friend relationship between the target user and the contacts corresponding to the preset contact lists. Thus, the server does not need to synchronize the usage state of the target contact information (of the target user) to contacts corresponding to the preset contact lists, which reduces possibility of wasting server source, and also guarantees safety of the target contact information at the same time.

It should be noted that, based on the methods for synchronizing states as shown in Fig. 1 to Fig. 5A, when the server synchronizes the usage state of the target contact information to contacts in the target contact list, the usage state of the target contact information is directly updated to terminals corresponding to the contacts in the target contact list. Optionally, after the server synchronizes the usage state of the target contact information to contacts in the target contact list, the contacts in the target contact list may modify the usage state of the stored target contact information.

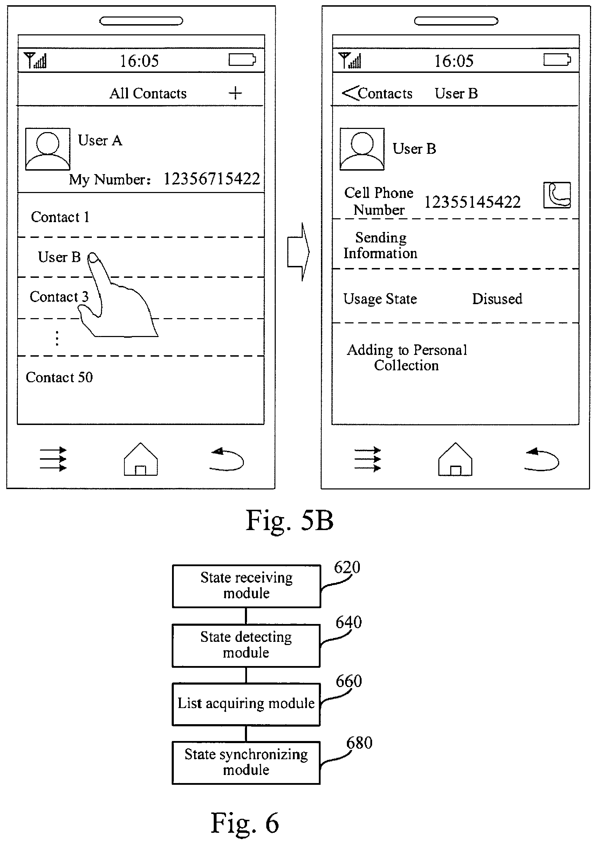

For example, after the user B changes his/her cell phone number, the usage state "disuse" of original cell phone number 12355145422 is sent to the server, and the server synchronizes the usage state "disuse" of the cell phone number to a user A, a friend of the user B. Referring to Fig. 5B, the user A edits the usage state of the cell phone number of the user B to "disuse" in the contact list of user A's cell phone.

The following is embodiments of devices according to the present invention, which may be configured to perform the embodiments of methods of the present invention. Details not disclosed in the embodiments of devices may be referred to the embodiments of methods.

Fig. 6 is a block diagram showing a device for synchronizing states according to an exemplary embodiment. Referring to Fig. 6, the device for synchronizing states includes, but not limited to a state receiving module 620, a state detecting module 640, a list acquiring module 660, and a state synchronizing module 680.

The state receiving module 620 is configured to acquire a usage state of target contact information of a target user.

The state detecting module 640 is configured to detect whether the usage state of the target contact information has changed based on pre-stored usage states of respective contact information.

The list acquiring module 660 is configured to, if the usage state of the target contact information has changed, acquire a target contact list of the target user.

The state synchronizing module 680 is configured to synchronize the usage state of the target contact information to contacts in the target contact list.

Accordingly, in the device for synchronizing states provided by embodiments of the present invention, a usage state of target contact information of a target user is acquired; it is detected whether the usage state of the target contact information has changed based on pre-stored usage states of respective contact information; if the usage state of the target contact information has changed, a target contact list of the target user is acquired; and the usage state of the target contact information is synchronized to contacts in the target contact list. A server detects whether the usage state of the target contact information has changed, and automatically synchronizes the usage state of the target contact information to the contacts in the target contact list when it is detected that the usage state of the target contact information has changed. It solves a problem that a user needs to manually send changed contact information to each contact in a contact list after he/she changes his/her contact information; and achieves an effect that the usage state of the target contact information is automatically synchronized to the contacts in the target contact list when the usage state of the target contact information has changed, i.e. automatically synchronizing the usage state of the target contact information.

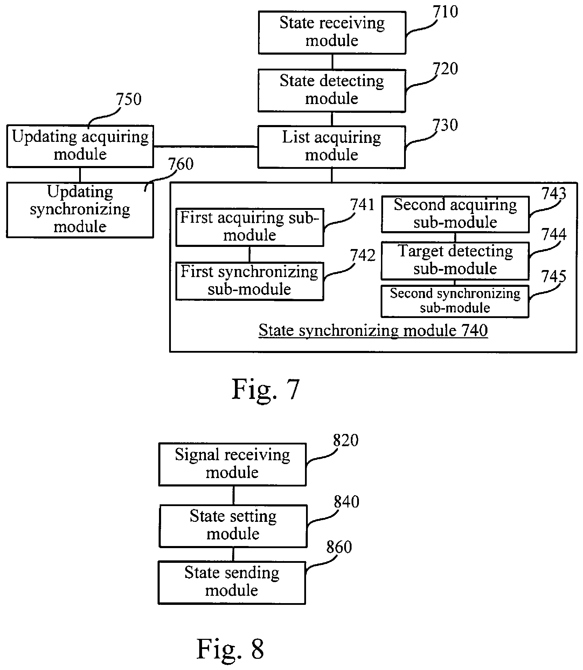

Fig. 7 is a block diagram showing a device for synchronizing states according to another exemplary embodiment. Referring to Fig. 7, the device for synchronizing states includes, but not limited to a state receiving module 710, a state detecting module 720, a list acquiring module 730 and a state synchronizing module 740.

The state receiving module 710 is configured to acquire a usage state of target contact information of a target user.

The state detecting module 720 is configured to detect whether the usage state of the target contact information has changed based on pre-stored usage states of respective contact information.

The list acquiring module 730 is configured to, if the usage state of the target contact information has changed, acquire a target contact list of the target user.

The state synchronizing module 740 is configured to synchronize the usage state of the target contact information to contacts in the target contact list.

In the present embodiment, the state synchronizing module 740 may include a first acquiring sub-module 741 and a first synchronizing sub-module 742.

The first acquiring sub-module 741 is configured to, for each contact in the target contact list, acquire a usage state of contact information of the contact.

The first synchronizing sub-module 742 is configured to synchronize the usage state of the target contact information to the contact whose contact information is "in use" in the target contact list.

In the present embodiment, the state synchronizing module 740 may further include a second acquiring sub-module 743, a target detecting sub-module 744, and a second synchronizing sub-module 745.

The second acquiring sub-module 743 is configured to, for each contact in the target contact list, acquire a preset contact list of the contact.

The target detecting sub-module 744 is configured to detect whether the target contact information exists in the preset contact list.

The second synchronizing sub-module 745 is configured to, if the target contact information exists in the preset contact list, synchronize the usage state of the target contact information to the contact corresponding to the preset contact list.

Optionally, in the present embodiment, the device may further include an updating acquiring module 750 and an updating synchronizing module 760:
The updating acquiring module 750 is configured to acquire updated target contact information.

The updating synchronizing module 760 is configured to synchronize the updated target contact information to contacts in the target contact list.

Accordingly, in the device for synchronizing states provided by embodiments of the present invention, a usage state of target contact information of a target user is acquired; it is detected whether the usage state of the target contact information has changed based on pre-stored usage states of respective contact information; if the usage state of the target contact information has changed, a target contact list of the target user is acquired; and the usage state of the target contact information is synchronized to contacts in the target contact list. A server detects whether the usage state of the target contact information has changed, and automatically synchronizes the usage state of the target contact information to the contacts in the target contact list when it is detected that the usage state of the target contact information has changed. It solves a problem that a user needs to manually send changed contact information to each contact in a contact list after he/she changes his/her contact information; and achieves an effect that the usage state of the target contact information is automatically synchronized to the contacts in the target contact list when the usage state of the target contact information has changed, i.e. automatically synchronizing the usage state of the target contact information.

Further, the server only synchronizes the usage state of the target contact information to contacts whose contact information is "in use" in the target contact list, which achieves that contacts whose contact information is "disused" in the target contact list cannot receive the usage state of the target contact information synchronized by the server. Thus, the server does not need to synchronize the usage state of the target contact information to contacts whose contact information is "disused", which reduces possibility of wasting server source, and also guarantees safety of the target contact information at the same time.

Further, the server only synchronizes the usage state of the target contact information to contacts whose preset contact lists have the target contact information. When the preset contact lists do not have the target contact information, it indicates that there may be no friend relationship between the target user and the contacts corresponding to the preset contact lists. Thus, the server does not need to synchronize the usage state of the target contact information to contacts corresponding to the preset contact lists, which reduces possibility of wasting server source, and also guarantees safety of the target contact information at the same time.

Fig. 8 is a block diagram showing a device for synchronizing states according to an exemplary embodiment. Referring to Fig. 8, the device for synchronizing states includes, but not limited to a signal receiving module 820, a state setting module 840, and a state sending module 860.

The signal receiving module 820 is configured to receive a setting signal.

The state setting module 840 is configured to set a usage state of target contact information based on the setting signal.

The state sending module 860 is configured to send the set usage state of the target contact information to a server, such that the server synchronizes the usage state of the target contact information to contacts in a contact list of a terminal when detecting that the usage stage of the target contact information has changed.

Accordingly, in the device for synchronizing states provided by embodiments of the present invention, a setting signal is received; a usage state of target contact information is set based on the setting signal; the set usage state of the target contact information is sent to a server, such that the server synchronizes the usage state of the target contact information to contacts in a contact list of a terminal when detecting that the usage stage of the target contact information has changed. The terminal sets a usage state of target contact information based on the setting signal and sends the set usage state to a server. It solves a problem that a user needs to manually send changed contact information to each contact in a contact list after he/she changes his/her contact information; and achieves an effect that the usage state of the target contact information is automatically synchronized to the contacts in the target contact list when the usage state of the target contact information has changed, i.e. automatically synchronizing the usage state of the target contact information.

As for the device according to the above embodiments, specific implementing manners of the operations of all the modules have been described in detail in the embodiments of the related method, which will not be described repeatedly herein.

One exemplary embodiment of the present invention provides a device for synchronizing states, which can implement the method for synchronizing states provided by the present invention. The device for synchronizing states includes: a processor and a memory for storing instructions executable by the processor.

The processor is configured to perform the steps that follow.

Acquire a usage state of target contact information of a target user.

Detect whether the usage state of the target contact information has changed based on pre-stored usage states of respective contact information.

If the usage state of the target contact information has changed, acquire a target contact list of the target user.

Synchronize the usage state of the target contact information to contacts in the target contact list.

One exemplary embodiment of the present invention provides a device for synchronizing states, which can implement the method for synchronizing states provided by the present invention. The device for synchronizing states includes: a processor and a memory for storing instructions executable by the processor.

The processor is configured to perform the steps that follow.

Receive a setting signal.

Set a usage state of target contact information based on the setting signal.

Send the set usage state of the target contact information to a server, such that the server synchronizes the usage state of the target contact information to contacts in a contact list of a terminal when detecting that the usage stage of the target contact information has changed.

In one embodiment, where functional modules are referred to for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

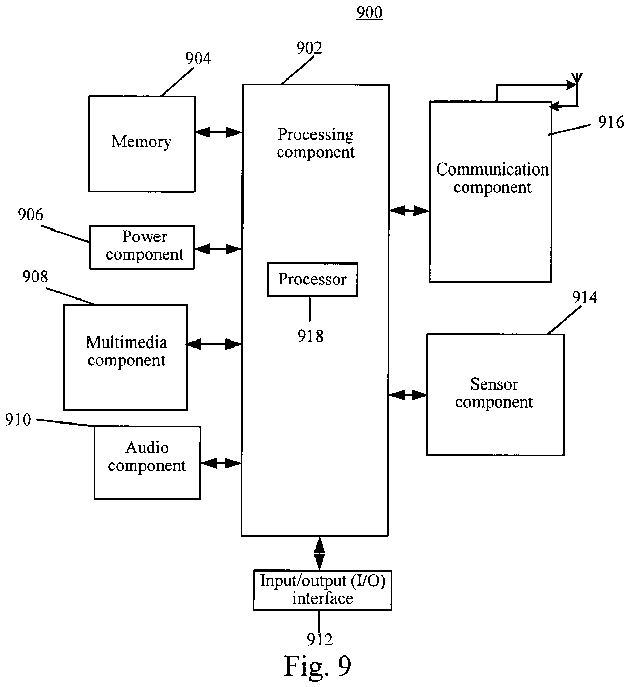

Fig. 9 is a block diagram showing a device for synchronizing states according to an exemplary embodiment. For example, the device 900 may be a mobile phone, a computer, a digital broadcast terminal, a messaging device, a gaming console, a tablet, a medical device, exercise equipment, a personal digital assistant, and the like.

Referring to Fig. 9, the device 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the device 900, such as the operations associated with display, telephone calls, data communications, camera operations, and recording operations. The processing component 902 may include one or more processors 918 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operations of the device 900. Examples of such data include instructions for any applications or methods operated on the device 900, contact data, phonebook data, messages, pictures, video, etc. The memory 904 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the device 900. The power component 906 may include a power management system, one or more power sources, and any other components associated with the generation, management, and distribution of power in the device 900.

The multimedia component 908 includes a screen providing an output interface between the device 900 and the user. In embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In embodiments, the multimedia component 908 includes a front camera and/or a rear camera. The front camera and the rear camera may receive an external multimedia datum while the device 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone ("MIC") configured to receive an external audio signal when the device 900 is in an operation mode, such as a call mode, a recording mode, and a voice recognition mode. The received audio signal may be further stored in the memory 904 or transmitted via the communication component 916. In embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide state assessments of various aspects of the device 900. For instance, the sensor component 914 may detect an open/closed state of the device 900, relative positioning of components, e.g., the display and the keypad, of the device 900, a change in position of the device 900 or a component of the device 900, a presence or absence of user contact with the device 900, an orientation or an acceleration/deceleration of the device 900, and a change in temperature of the device 900. The sensor component 914 may include a proximity sensor configured to detect the presence of nearby objects without any physical contact. The sensor component 914 may further include a light sensor, such as a CMOS or CCD image sensor, for use in imaging applications. In embodiments, the sensor component 914 may further include an accelerometer sensor, a gyroscope sensor, a magnetic sensor, a pressure sensor or a temperature sensor.

The communication component 916 is configured to facilitate communication, wired or wirelessly, between the device 900 and other devices. The device 900 may access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described method for synchronizing states.

In exemplary embodiments, there is further provided a non-transitory computer-readable storage medium including instructions, such as included in the memory 904, executable by the processor 918 in the device 900, for performing the above-described methods for synchronizing states. For example, the non-transitory computer-readable storage medium may be a ROM, a RAM, a CD-ROM, a magnetic tape, a floppy disc, an optical data storage device, and the like.

## Claims

1. A method for synchronizing states, comprising:
acquiring (101, 304) a usage state of target contact information of a target user;
detecting (102, 305) whether the usage state of the target contact information has changed based on pre-stored usage states of respective contact information;
if the usage state of the target contact information has changed, acquiring (103, 306) a target contact list of the target user; and
synchronizing (104, 307) the usage state of the target contact information to contacts in the target contact list.

2. The method of claim 1, wherein the step (307) of synchronizing the usage state of the target contact information to contacts in the target contact list comprises:
for each contact in the target contact list, acquiring (307a) a usage state of contact information of the contact; and
synchronizing (307b) the usage state of the target contact information to the contact whose contact information is "in use" in the target contact list.

3. The method of claim 1, wherein the step (307) of synchronizing the usage state of the target contact information to contacts in the target contact list comprises:
for each contact in the target contact list, acquiring (307c) a preset contact list of the contact;
detecting (307d) whether the target contact information exists in the preset contact list; and
if the target contact information exists in the preset contact list, synchronizing (307e) the usage state of the target contact information to the contact corresponding to the preset contact list.

4. The method of any one of claims 1 to 3, wherein if the usage state of the target contact information is updated to disuse, the method further comprises:
acquiring updated target contact information; and
synchronizing the updated target contact information to contacts in the target contact list.

5. A method for synchronizing states, comprising:
receiving (201, 301) a setting signal;
setting (202, 302) a usage state of target contact information based on the setting signal; and
sending (203, 303) the set usage state of the target contact information to a server, such that the server synchronizes the usage state of the target contact information to contacts in a contact list of a terminal when detecting that the usage stage of the target contact information has changed.

6. A device for synchronizing states, comprising:
a state receiving module (620, 710) configured to acquire a usage state of target contact information of a target user;
a state detecting module (640, 720) configured to detect whether the usage state of the target contact information has changed based on pre-stored usage states of respective contact information;
a list acquiring module (660, 730) configured to, if the usage state of the target contact information has changed, acquire a target contact list of the target user; and
a state synchronizing module (680, 740) configured to synchronize the usage state of the target contact information to contacts in the target contact list.

7. The device of claim 6, wherein the state synchronizing module (740) comprises:
a first acquiring sub-module (741) configured to, for each contact in the target contact list, acquire a usage state of contact information of the contact; and
a first synchronizing sub-module (742) configured to synchronize the usage state of the target contact information to the contact whose contact information is "in use" in the target contact list.

8. The device of claim 6, wherein the state synchronizing module (740) comprises:
a second acquiring sub-module (743) configured to, for each contact in the target contact list, acquire a preset contact list of the contact;
a target detecting sub-module (744) configured to detect whether the target contact information exists in the preset contact list; and
a second synchronizing sub-module (745) configured to, if the target contact information exists in the preset contact list, synchronize the usage state of the target contact information to the contact corresponding to the preset contact list.

9. The device of any one of claims 6 to 8, wherein if the usage state of the target contact information is updated to disuse, the device further comprises:
an updating acquiring module (750) configured to acquire updated target contact information; and
an updating synchronizing module (760) configured to synchronize the updated target contact information to contacts in the target contact list.

10. A device for synchronizing states, comprising:
a signal receiving module (820) configured to receive a setting signal;
a state setting module (840) configured to set a usage state of target contact information based on the setting signal; and
a state sending module (860) configured to send the set usage state of the target contact information to a server, such that the server synchronizes the usage state of the target contact information to contacts in a contact list of a terminal when detecting that the usage stage of the target contact information has changed.

11. A computer program including instructions for executing the steps of a method for synchronizing states according to any one of claims 1 to 4 when said program is executed by a computer.

12. A computer program including instructions for executing the steps of a method for synchronizing states according to claim 5 when said program is executed by a computer.
